# EUROPEAN PATENT SPECIFICATION

(11) **EP 1 950 475 B1**
(45) Date of publication and mention of the grant of the patent: **09.01.2013**
(21) Application number: 06832862.4
(22) Date of filing: 17.11.2006
(51) Int. Cl.: F16J 15/34

(54) **MECHANICAL SEAL DEVICE**
MECHANISCHE ABDICHTUNGSVORRICHTUNG
DISPOSITIF D'ETANCHEITE MECANIQUE

(30) Priority: 17.11.2005 JP 2005333318
(43) Date of publication of application: 30.07.2008
(73) Proprietor: Eagle Industry Co., Ltd., Tokyo 105-8587 (JP)
(72) Inventor: TAKAHASHI, Hidekazu c/o Eagle Industry co., Ltd., Tokyo 105-8587 (JP)
(74) Representative: Wiebusch, Manfred
(86) International application number: PCT/JP2006/322983
(87) International publication number: WO 2007/058306

(56) References cited:
- WO-A2-01/07803
- JP-A- 02 221 770
- JP-A- 2003 097 727
- JP-A- 2003 166 651
- US-A- 5 913 520
- US-B1- 6 457 720

## Description

### Technical field

The present invention relates to a split type mechanical seal device adapted such that two portions into which a seal ring is split parallel to a shaft direction are assembled from both sides around an outer circumferential surface of a rotary shaft fitting in a machine so as to join split surfaces of the two portions to each other. More particularly, the present invention relates to a mechanical seal device in which sealing capability of the split type seal ring is improved.

### Background art

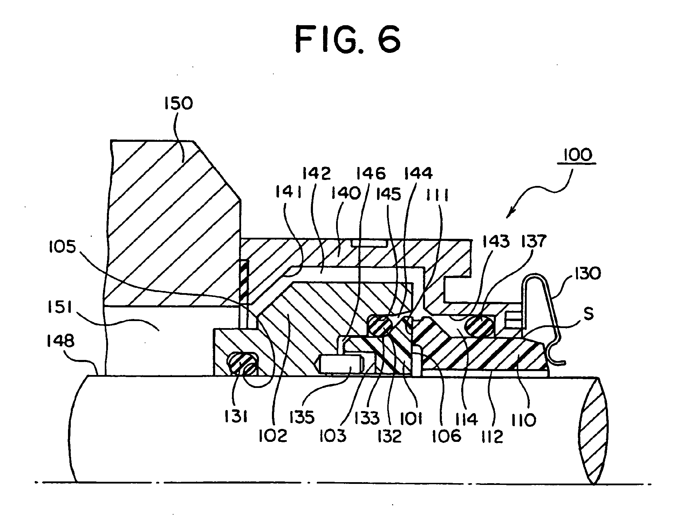

Related technologies of the present invention include a mechanical seal device 100 illustrated in Fig. 6 (see, for example, Patent documents 1, 2, and 3 below). Fig. 6 is a half sectional view of the mechanical seal device 100. This mechanical seal device 100 is of an inside seal type. In Fig. 6, a rotary shaft 148 passes through a passage 151 of a housing 150. Also, a gland assembly 140, which is split into two portions, is joined at an end surface thereof to that of the housing 150, and both of them are tightened and fixed with an unshown bolt. Further, split surfaces of the two portions of the gland assembly 140 are joined to each other, and tightened with a plurality of unshown bolts.

Inside an inner circumferential surface 141 of the gland assembly 140, a mechanical seal is arranged. The mechanical seal is provided with a holder assembly 102, which is fitted into the rotary shaft 148 to rotationally move together, and split into two portions parallel to the shaft direction. Split surfaces of the two portions of the holder assembly 102 are also joined to each other, and integrally tighten with a plurality of unshown bolts. Also, between an outer circumferential surface of the holder assembly 102 and the inner circumferential surface 141 of the gland assembly 140, a fluid passage 142 through which a sealing target fluid circulates is formed. Further, an annular groove 105 provided on the housing side of an inner circumferential surface of the holder assembly 102 is fitted therein with a first O-ring 131 to seal the fitting portion between the rotary shaft 148 and the holder assembly 102. Also, a concave portion 146 is provided inside one end of the holder assembly 102, and a drive pin 135 is implanted into and bonded to the innermost part of an inner circumferential surface of the concave portion 146. In addition, around an outer part of the inner circumferential surface of the concave portion 146, a first step portion 145 for an O-ring formed to have a larger diameter is further provided.

In the concave portion 146 of the holder assembly 102, a rotary seal ring 101, which is split into two portions parallel to the shaft direction, is fitted. The rotary seal ring 101 is provided at one end thereof with a sealing surface for rotation 106. Also, the rotary seal ring 101 is provided at the other end with a locking hole 103, which engages with the drive pin 135, and the rotary seal ring 101 is locked by the drive pin 135 upon rotation. Further, between the first step portion 145 of the holder assembly 102 and an outer circumferential surface of the rotary seal ring 101, a space portion 133 for an O-ring is formed, and in the space portion 133, a second O-ring 132 is provided. The second O-ring 132 tightens the two portions of the 2-split type rotary seal ring 101 so as to bring split surfaces of the two portions into close contact with each other, and blocks the space portion 133. Also, the space portion 133 is formed with a flow-in port 144 through which the sealing target fluid flows in.

A fixed seal ring 110, which is provided at an end surface thereof with a sealing surface for fixing 111 coming into close contact with the sealing surface for rotation 106 and split into two portions parallel to the shaft direction, is fitted at an inner circumferential surface 112 thereof into the rotary shaft 148 at an interval. An outer circumferential fitting surface S of the fixed seal ring 110 is movably fitted into a stepped inner circumferential surface having a small diameter, which is arranged inside a space forming surface 143 of the gland assembly 140 and around an outer part of the space forming surface 143. Also, the fixed seal ring 110 is pressed toward the rotary seal ring 101 by a plurality of plate springs 130 that are provided on an end surface of the gland assembly 140 at equal intervals in a circumferential direction. Further, between the fitting surface S of the fixed seal ring 110 and the space forming surface 143, a space 114 for an O-ring is formed. In the space 114, a third O-ring 137 is fitted. The third O-ring 137 tightens the fitting surface S so as to bring split surfaces of the two portions, into which the fixed seal ring 110 is split, into close contact with each other, and blocks the space 114 from the outside.

In the mechanical seal device 100 configured as above, the mechanical seal should be formed inside the split type gland assembly 140 provided in the mechanical seal device 100, so that a combination of the gland assembly 140, holder assembly 102, and mechanical seal becomes complicated in structure and large. Also, the mechanical seal device 100 is configured such that the fluid passage 142 through which the sealing target fluid circulates is provided between the gland assembly 140 and the holder assembly 102, so that it is of the so-called inside seal type, and therefore becomes larger in structure.

Further, each of the sealing surface for rotation 106 of the rotary seal ring 101 and that for fixing 111 of the fixed seal ring 110 is split into two portions, so that split surfaces of the two portions of each of the sealing surface for rotation 106 and that for fixing 111 may have a microscopic step therebetween upon rotation. Even if the step is microscopic, it causes both of the sealing surfaces 106 and 111 to wear upon rotation to thereby reduce sealing capability. In particular, if the sealing target fluid is gas, lubricating action due to liquid does not arise between the sealing surface for rotation 106 of the rotary seal ring 101 and that for fixing 111 of the fixed seal ring110, so that fluctuations of the split surfaces facilitate the wearing of the both sealing surfaces 106 and 111 upon rotation. Also, both of the sealing surfaces 106 and 111 may cause a squeal phenomenon of generating noise due to dry friction upon sliding, so that the respective joining split surfaces induce repetitive and fine movements, resulting in rapid wearing of the both sealing surfaces 106 and 111. Further, if both of the seal rings 101 and 111 are made of a hard material such as silicon carbide in order to improve wear resistance, sliding heat generation may rapidly occur. Accordingly, because the sliding heat generation occurs in the both sealing surfaces 106 and 111 in addition to the squeal phenomenon, the second and third O-rings 132 and 137 are heated due to the sliding heat generation to loose elasticity, resulting in a reduction of the sealing capability.

Patent document 1: Japanese published unexamined patent application JP 7 198 043 A
Patent document 2: Japanese published unexamined utility model application No. JP 54 106 457 A
Patent document 3: Japanese published unexamined utility model application JP 5 042 835 A
A seal device according to the preamble of claim 1 has been disclosed in JP 2003166651 A.
JP 2003097727 A discloses a split type mechanical seal device having a sealing layer on the split surface of a sealing ring, i.e. the sealing layer is formed in the parting plane at which the sealing ring is fractured into two equal parts.

### Disclosure of the invention

### Problem to be solved by the invention

The present invention is made in consideration of the problems as described above, and an object thereof for solving such technical problems is to reduce the friction of the sealing surfaces of the mechanical seal device upon sliding and also to prevent the sealing surfaces from wearing. Another object of the present invention is to prevent the sealing surfaces and joining split surfaces of the seal rings from abnormally wearing. Still another object of the present invention is to prevent seizure of the sealing surfaces and the squeal phenomenon in the dry friction condition of the sealing surfaces upon rotation. Yet another object of the present invention is to simplify a structure of the mechanical seal device and facilitate assembly and decomposition of it to thereby reduce assembly and decomposition cost.

### Means for solving the problem

The present invention is made in order to solve the technical problems as described above, and technical means for solving them is configured as follows.

A mechanical seal device according to the present invention is intended for sealing a sealing target fluid between a hole of a housing and a rotary shaft inserted into said hole inside a machine, the mechanical seal device being attached to an outer side of the machine, and comprises:
a split stationary seal ring to be fixed having: a fitting surface on an outer circumference, the fitting surface being hermetically fitted into a circumferential surface of the hole of said housing and held movably in a shaft direction; a first outer circumferential surface formed on said outer circumference; a sealing surface on an end surface in the shaft direction; and a plurality of first split contact surfaces capable of being closely joined to one another, the plurality of first split contact surfaces being exposed by splitting the split stationary seal ring parallel to the shaft direction;
a first tightening ring having: a first tightening surface fitted into said first outer circumferential surface of said split stationary seal ring to bring said plurality of first split contact surfaces of said split stationary seal ring into close contact with one another; and a plurality of first split surfaces capable of being closely joined to one another, the plurality of first split surfaces being exposed by splitting the first tightening ring parallel to the shaft direction;
a split rotary seal ring to be rotationally moved by said rotary shaft, the split rotary seal ring having: an opposed sealing surface coming into close contact with said sealing surface oppositely; a second outer circumferential surface provided on an outer circumference; and a plurality of second split contact surfaces capable of being closely joined to one another, the plurality of second split contact surfaces being exposed by splitting the split rotary seal ring parallel to the shaft direction; and
a second tightening ring having: a second tightening surface fitted into said second outer circumferential surface of said split rotary seal ring to bring said plurality of second split contact surfaces of said split rotary seal ring into close contact with one another; and a plurality of second split surfaces capable of being closely joined to one another, the plurality of second split surfaces being exposed by splitting the second tightening ring parallel to the shaft direction; wherein
a gap is provided between an inner circumferential surface of said split stationary seal ring and said rotary shaft, the gap being capable of circulating therethrough the sealing target fluid on an inner circumferential side of a joining portion between said sealing surface and said opposed sealing surface; characterized in that both of said sealing surface of said split stationary seal ring and said opposed sealing surface of said split rotary seal ring have sealing layers made of a rubber or resin material.

### Effect of the invention

The mechanical seal device according to the present invention is simplified in structure, and in order to facilitate assembly thereof, configured to be of an outside seal type that seals the sealing target fluid on the inner circumferential side of the sealing surface of the split stationary seal ring. For this reason, if the high-pressure sealing target fluid acts, it is likely to leak from between both of the sealing surfaces, as compared with an unsplit seal ring. However, because the sealing layer made of resin or rubber is coated on at least one of the sealing surfaces of the both seal rings, the sealing target fluid can be effectively prevented from leaking even if the high pressure acts on the sealing surface of the split type seal ring. Consequently, even such split type seal ring can reliably seal the sealing target fluid having pressure ranging from low to high.

In the split type seal ring, the sealing surfaces are split, so that minute steps may arise on both of the sealing surfaces during rotation. Even if the steps on the sealing surfaces are minute, they wear the sealing surfaces during rotation, and therefore reduce their sealing capability. However, providing the sealing layer made of resin or rubber on the sealing surface enables the sealing surface to be effectively prevented from wearing. Also, even if the sealing target fluid is gas, the sealing layer can prevent the squeal phenomenon upon sliding, and friction and wearing even in the dry friction condition. Further, the sealing layer does not require an expensive material for the split type seal ring, so that an inexpensive material can be used for production, and therefore cost can be significantly reduced.
Still further, the split type seal ring can employ the outside seal type structure because it is configured to provide the gap on the inner circumferential side of the split stationary seal ring to be able to circulate the sealing target fluid, and can be configured to fix the outer circumferential surface with the tightening ring, so that the number of components can be reduced; assembly becomes easy; and production cost can be reduced. Yet further, the split type seal ring is simple in structure, so that there is no place attached with the sealing target fluid even if the sealing target fluid is a highly viscous and highly slurry chemical solution, or the like, and therefore the sealing capability can be effectively exercised.

### Brief description of the drawings

Fig. 1 is a full sectional view of a mechanical seal device according to a first embodiment of the present invention.

Fig. 2A is a sectional view of a split stationary seal ring in Fig. 1.

Fig. 2B is an elevational view of the split stationary seal ring in Fig. 1.

Fig. 3A is a sectional view of a split rotary seal ring in Fig. 1.

Fig. 3B is an elevational view of the split rotary seal ring in Fig. 1.

Fig. 4 is an elevational view of a first tightening ring in Fig. 1.

Fig. 5 is a full sectional view of a mechanical seal device according to a second embodiment of the present invention.

Fig. 6 is a half sectional view of a conventional art mechanical seal device related to the present invention.

### Explanations of letters or numerals

- 1:: Mechanical seal device
- 2:: Split stationary seal ring
- 2A:: Sealing surface
- 2B:: First step surface
- 2C:: Inner circumferential surface
- 2D:: First outer circumferential surface
- 2D1:: Fitting surface
- 2D2:: Sliding layer
- 2G:: Annular groove
- 2J:: First split contact surface
- 2X:: One portion of split stationary seal ring
- 2Y:: Other portion of split stationary seal ring
- 3A:: First locking groove
- 3B:: Second locking groove
- 5:: Spacer
- 7:: First tightening ring
- 7A:: First split tightening ring
- 7A1:: First split surface
- 7B:: Second split tightening ring
- 7B1:: First split surface
- 7C:: First tightening surface
- 7C1:: First supporting surface
- 7F:: Counterbore portion
- 7N:: Bolt hole
- 7S:: Tightening screw
- 7H:: Spring fitting hole
- 7A:: First split tightening ring
- 7B:: Second split tightening ring
- 9A:: First split elastic ring
- 9B:: Second split elastic ring
- 10A:: First sealing layer
- 10B:: Second sealing layer
- 12:: Split rotary seal ring
- 12A:: Opposed sealing surface
- 12B:: Second step surface
- 12C:: Second joining surface
- 12C1:: Stepped surface
- 12D:: Second outer circumferential surface
- 12D1:: Third outer circumferential surface
- 12J:: Second split contact surface
- 12X:: One portion of split rotary seal ring
- 12Y:: Other portion of split rotary seal ring
- 17:: Second tightening ring
- 17A:: Third split tightening ring
- 17B:: Fourth split tightening ring
- 17C:: Second tightening surface
- 17C1:: Second supporting surface
- 35A, 35B:: Bolt
- 37:: Second O-ring
- 38:: First O-ring
- 40:: Third tightening ring
- 40C:: Connecting surface
- 43A:: Fixing pin
- 43B:: Drive pin
- 40D:: Annular convex portion
- 50:: Rotary shaft
- 60:: Housing
- 60A:: Hole circumferential surface

### Best mode for carrying out the invention

A mechanical seal device according to a preferred embodiment of the present invention will hereinafter be described in detail on the basis of the drawings. Note that each of the drawings to be illustrated below is an accurate one based on a design.

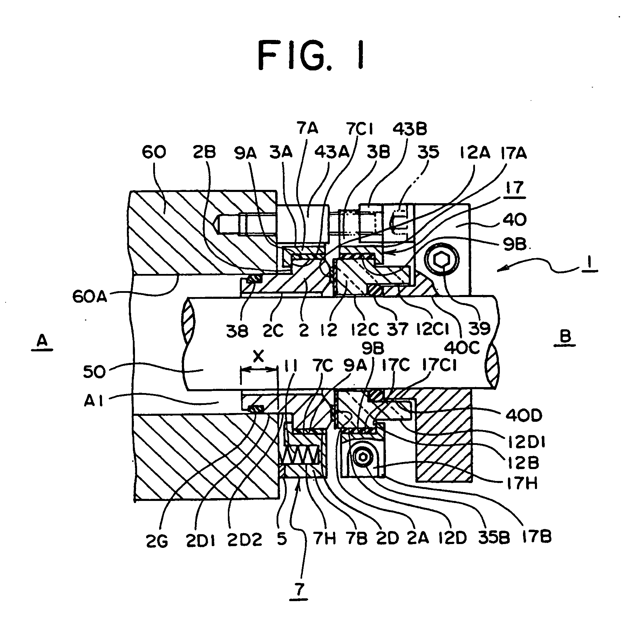

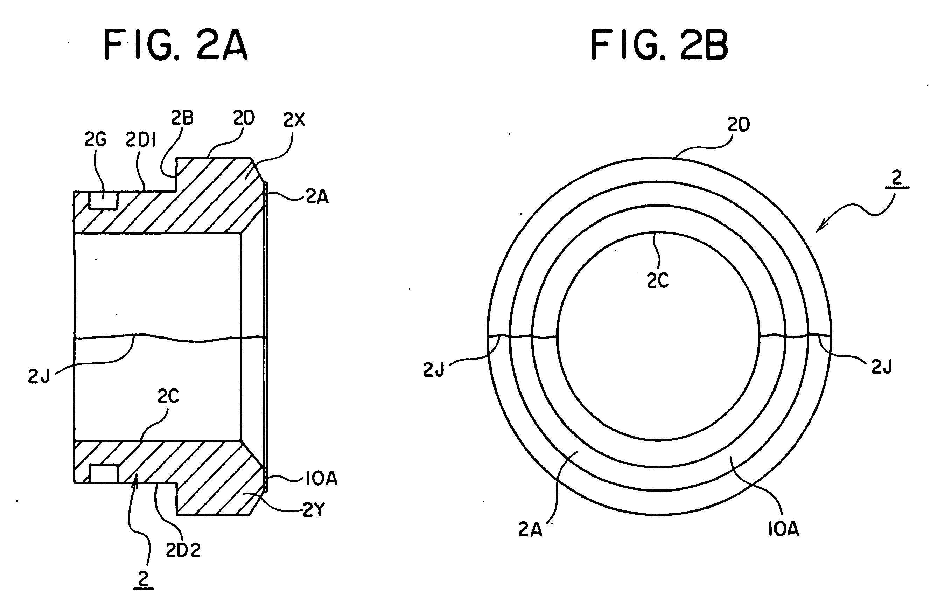

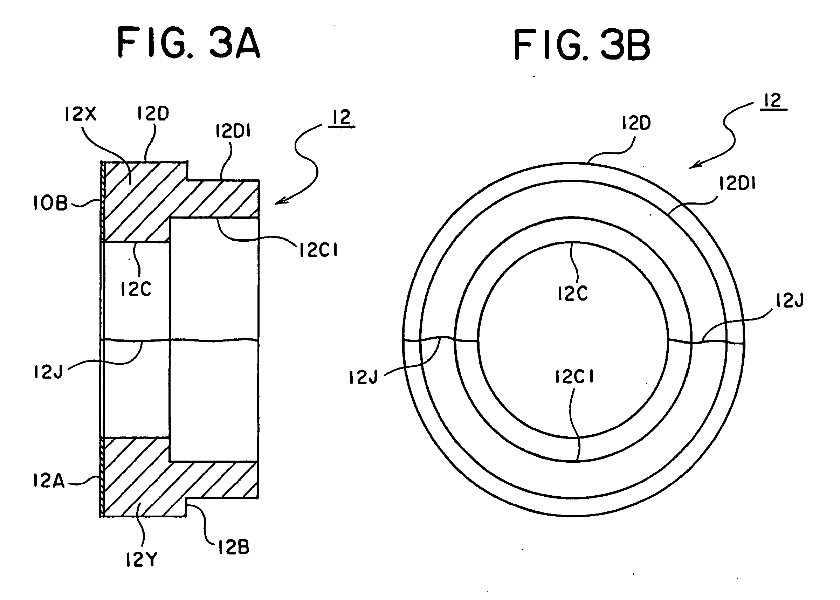

Fig. 1 is a sectional view of a mechanical seal device 1 illustrating a first embodiment according to the present invention. Also, Figs. 2A and 2B illustrate a split stationary seal ring 2 in Fig. 1, and Figs. 3A and 3B a split rotary seal ring 12 in Fig. 1. The following description is given on the basis of Figs. 1, 2A, 2B, 3A, and 3B. Reference numeral 1 represents the mechanical seal device. The mechanical seal device 1 is attached to a side (outer side) of a housing 60 on an outside B of a machine to seal a circulating path A1 between a hole circumferential surface 60A of the housing 60 and a rotary shaft 50, through which a sealing target fluid flows. The circulating path A1 inside the housing 60 is communicatively connected to an inside A of the machine. The rotary shaft 50 is arranged inside the hole circumferential surface 60A.

A fitting surface 2D1 of the split stationary seal ring 2, which is split into two portions parallel to the shaft direction, is movably fitted into the hole circumferential surface 60A of the housing 60. The split stationary seal ring 2 is made of silicon carbide, and formed in an annular seal ring shape by joining a first split contact surface 2J of the one portion of the split stationary seal ring (2X) and that of the other portion of the split stationary seal ring (2Y) to each other (see Figs. 2A and 2B). In addition, the fitting surface 2D1 is preferably applied thereon with an unshown sliding layer 2D2 made of a hard rubber or resin material. The sliding layer 2D2 is preferably formed to have a thickness of 0.005 mm to 0.08 mm. Also, in order to seal a fitting portion between the housing 60 and the split stationary seal ring 2, an annular groove 2G is formed on the fitting surface 2D1 of the split stationary seal ring 2. In the annular groove 2G, a first O-ring 38 made of a rubber or resin material is arranged. Further, an inner circumferential surface 2C of the split stationary seal ring 2 is formed to have a diameter larger than that of the rotary shaft 50.

A gap between the inner circumferential surface 2C and the rotary shaft 50 is communicatively connected to the circulating path A1. Also, an end surface of the split stationary seal ring 2 is provided with a sealing surface 2A. Further, a first outer circumferential surface 2D having a diameter larger than that of the fitting surface 2D1 is formed on an outer circumferential side of the split stationary seal ring 2. A boundary part between the fitting surface 2D1 and the first outer circumferential surface 2D forms into a first step surface 2B. The first step surface 2B and the sealing surface 2A are preferably formed to be parallel to each other with high accuracy (for more detail, see the enlarged diagram, Fig. 2).

Fig. 2A is a full sectional view in which the split stationary seal ring 2 illustrated in Fig. 1 is enlarged. Also, Fig. 2B is an elevational view of the split stationary seal ring 2 as viewed from the sealing surface 2A side. The respective first split contact surfaces 2J and 2J of the one portion 2X and the other portion 2Y of the split stationary seal ring 2 are fractured surfaces formed by equally breaking the annular shape into two parallel to the shaft direction. Joining the respective first split contact surfaces 2J and 2J, which are the fractured surfaces, to each other can bring these portions 2X and 2Y into an original state to thereby not displace the split stationary seal ring 2 parallel to the shaft direction. For this reason, as a material for the split stationary seal ring 2, a material that is appropriate for the seal ring and also fragile is selected. For example, a hard material such as silicon carbide, ceramic, or carbon, or a fragile material such as a hard resin material is used for the seal ring. Also, in a case of a material incapable of forming the first split contact surfaces 2J and 2J as the fractured surfaces, the first split contact surfaces 2J and 2J may be formed by machining. Further, each of the first split contact surfaces 2J and 2J is preferably formed thereon with a coating layer made of a rubber or resin material. For example, the coating layer (not shown) coated on the first split contact surface 2J is preferably formed to be a thin layer having a thickness of 0.005 mm to 0.09 mm by resin coating.

Also, onto the sealing surface 2A of the split stationary seal ring 2, a first sealing layer 10A made of a resin material is joined with an adhesive. The first sealing layer 10A may be made of a rubber material depending on a type of the sealing target fluid. As a material for the first sealing layer 10A, a material such as polyamide, polytetrafluoroethylene (PTFE), fluororesin, perfluoroelastomer, or fluororubber is used depending on an operating temperature or wear resistance. Also, the first sealing layer 10A is provided with a cut surface for insertion (not shown) formed by radially or obliquely cutting a part of the first sealing layer 10A. If the first sealing layer 10A is thick, the cut surface may be formed to be slanted in the thickness direction. The first sealing layer 10A is expanded from the cut surface for insertion, and then laterally inserted and fitted in a radial direction of the rotary shaft 50. Subsequently, the first sealing layer 10A is joined to the sealing surface 2A with the adhesive.

Alternatively, the first sealing layer 10A may be formed by being preliminarily coated on the sealing surfaces 2A and 2A of the both portions 2X and 2Y of the halved split stationary seal ring 2. Still alternatively, the first sealing layer 10A may be coated on the sealing face 2A after the split stationary seal ring 2 has been fitted around the rotary shaft 50. The first sealing layer 10A is formed to have a thickness range of 0.01 mm to 2 mm; however, there is an example where the thickness is designed in the range of 0.005 mm to 3.2 mm in consideration of a lifetime due to wearing, or the like. Also, the stationary seal ring 2 may be formed such that a back surface thereof on the sealing target fluid side has an area larger than that of the sealing surface 2A to make pressure of the sealing target fluid act on the back surface, and thereby surface pressure on the sealing surface 2A may be increased. As described, even if the pressure of the sealing target fluid acts on the split stationary seal ring 2, the wear resistance and sealing capability of the split stationary seal ring 2 can be maintained high due to the elasticity of the first sealing layer 10 provided on the sealing surface 2A. Note that in Figs. 2A and 2B, respective parts represented by Reference numerals of which explanations are not given are the same parts of which descriptions are given with the same Reference numerals in Fig. 1.

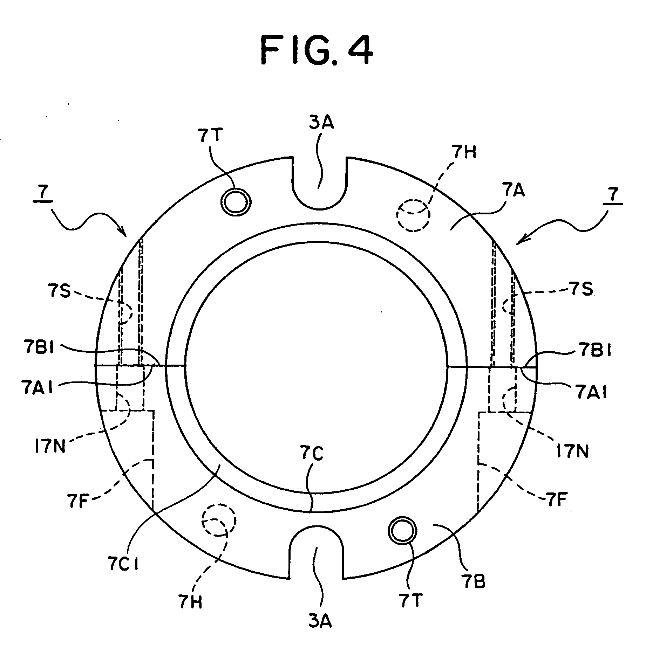

Fig. 4 is an elevational view of a first tightening ring 7. The first tightening ring 7 is described below with reference to Figs. 1 and 4. The first tightening ring 7 is split into two parallel to the shaft direction to form into a first split tightening ring 7A and a second split tightening ring 7B. The first tightening ring 7 is formed on an inner circumferential surface thereof with a first tightening surface 7C. The first tightening surface 7C is fitted into a first outer circumferential surface 2D of the split stationary seal ring 2, and formed on an end side thereof with a first supporting surface 7C1 for locking the first step surface 2B. By making first split surfaces 7A1 of the first split tightening ring 7A and those 7B1 of the second split tightening ring 7B face to each other, and bringing the first split surfaces 7A1 and 7B1 into close contact with each other, the first tightening surface 7C and the first supporting surface 7C1 form into an annular surface of which a cross-section is "L" shaped. Also, the first split tightening ring 7A is provided with two tightening screws 7S and 7S vertically from the both first split surfaces 7A1, respectively. Further, the second split tightening ring 7B is provided with bolt holes 17N and 17N at positions corresponding to those of the tightening screws 7S and 7S, and also provided with counterbore portions 7F and 7F at the ends of the respective bolt holes 17N and 17N.

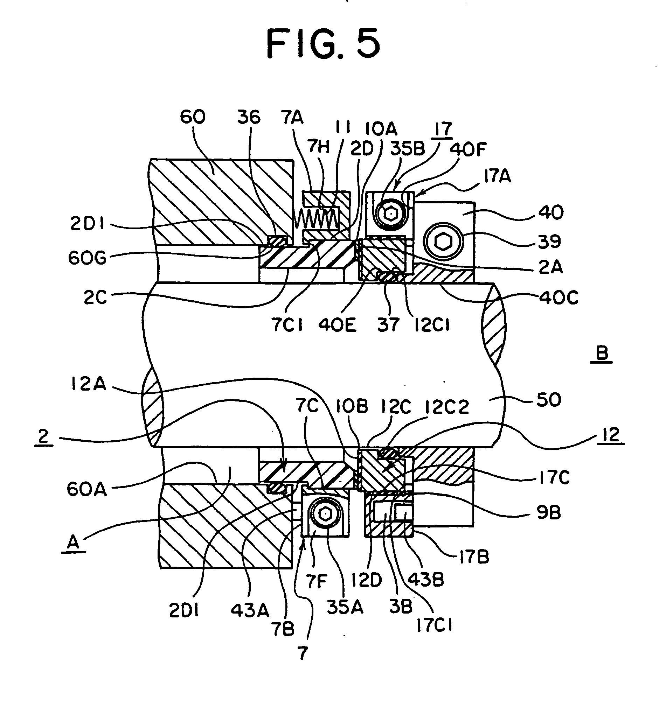

Also, on the front surface of the first tightening ring 7 illustrated in Fig. 4, screw holes 7T and 7T are provided at 180-degree symmetrical positions, respectively. Further, fitting holes 7H and 7H for fitting coil springs 11 are provided on the rear surface on the side opposite to the front surface. Still further, first locking grooves 3A and 3A are formed at radially symmetrical positions on an outer circumferential surfaces of the first and second split tightening rings 7A and 7B, respectively. Fixing pins 43A fixed to the housing 60 illustrated in Fig. 1 respectively engage with the first locking grooves 3A and 3A, and fix the first tightening ring 7 not so as to rotationally move. Then, as illustrated in Fig. 1 or 5, the first and second split tightening rings 7A and 7B are tightened by bringing the first split surfaces 7A1 and those 7B1 into close contact with each other; passing two bolts 35A (see Fig. 5) through the respective bolt holes 17N and 17N; and screwing the bolts 35A into the tightening screws 7S and 7S. Also, the first tightening surface 7C of the first tightening ring 7 is fitted into the first outer circumferential surface 2D of the split stationary seal ring 2 to bring the first split contact surfaces 2J and 2J of the split stationary seal ring 2 into close contact with each other. Further, the first supporting surface 7C1 locks the first step surface 2B to support the sealing surface 2A side present in the shaft direction of the split stationary seal ring 2. The locking between the first step surface 2B and the first supporting surface 7C1 enables the first tightening ring 7 to press the split stationary seal ring 2 toward the sealing surface 2A.

Also, first split elastic rings 9A and 9A into which a cylindrical body is split are provided so as to face to each other between the first outer circumferential surface 2D of the split stationary seal ring 2 and the first tightening surface 7C of the first tightening ring 7. The joined first split elastic rings 9A prevent deformation of the sealing surface 2A, which is due to elastic deformation of the split stationary seal ring 2 occurring when the split stationary seal ring 2 is tightened by the first tightening ring 7. As a result, the sealing surface 2A can exercise its sealing capability. Also, a material for the first split elastic ring 9A is a rubber or resin material. Further, the first split elastic ring 9A is adapted to have a thickness ranging from 0.05 mm to 3 mm. Preferably, the thickness is in the range of 0.08 mm to 2 mm. If the thickness of the first split elastic ring 9A is too large, tightening becomes insufficient. On the other hand, if it is too small, the deformation of the first stationary seal ring 2 is induced. Note that the thickness of the first split elastic ring 9A is not limited to the above dimension range, but may be designed depending on a dimension of a diameter of the split stationary seal ring 2.

The fitting holes 7H provided on the first tightening ring 7 are used for spring seats. One ends of the coil springs 11 are inserted into the fitting holes 7H, and placed on the spring seats in the fitting holes 7H, respectively. Also, the other ends of the coil springs 11 are connected to the side of the housing 60 on the outside B of the machine. In addition, between the side on the outside B of the machine and an end surface of the first tightening ring 7, two semicircular spacers 5 into which a cylindrical body is split are annularly fitted. The spacers 5 also enable the first tightening ring 7 to be stably fitted even if the side on the outside B of the machine is roughly finished.

Fig. 3A is a full sectional view illustrating an enlarged version of the split rotary seal ring 12 in Fig. 1. Also, Fig. 3B is an elevational view of the split rotary seal ring 12 as viewed from its rear surface side. Regarding the split rotary seal ring 12, similarly to the split stationary seal ring 2, the cylindrical body is equally broken into two portions parallel to the shaft direction to form a fractured surface of one portion of the split rotary seal ring (12X) as a second split contact surface 12J, and that of the other portion of the split rotary seal ring (12Y) as another second split contact surface 12J. Also, an inner circumferential surface of the split rotary seal ring 12 with the split contact surfaces 12J and 12J of the both portions of the split rotary seal ring (12X and 12Y) being joined to each other forms into a joining surface 12C, which is to be fitted into the outer circumferential surface of the rotary shaft 50, and a stepped surface 12C1, which has a diameter larger than that of the joining surface 12C and is intended for a sealing surface. The joining surface 12C and stepped surface 12C1 are adapted such that the joining surface 12C is fitted into the rotary shaft 50, and a second O-ring 37 made of a rubber or resin material can be fitted between the stepped surface 12C1 and the rotary shaft 50.

An end surface of the split rotary seal ring 12 is formed as an opposed sealing surface 12A. The opposed sealing surface 12A is formed so as to come into contact with the sealing surface 2A of the split stationary seal ring 2 to seal the sealing target fluid. Also, an outer circumference of the split rotary seal ring 12 forms into a second outer circumferential surface 12D and a third outer circumferential surface 12D1 having a diameter smaller than that of the second outer circumferential surface 12D on the outside B of the machine. Further, a boundary part between the second outer circumferential surface 12D and the third outer circumferential surface 12D1 forms into a second step surface 12B. The split rotary seal ring 12 is, similarly to the split stationary seal ring 2, made of a material such as silicon carbide, carbon, ceramic, or hard resin material. Also, the split rotary seal ring 12 is preferably made of a material that can be broken to form the second split contact surfaces 12J and 12J, as well.

Further, a second sealing layer 10B made of a resin material is joined to the opposed sealing surface 12A of the split rotary seal ring 12 with an adhesive, as well. The second sealing layer 10B may be made of a rubber material depending on a type of the sealing target fluid. As a material for the second sealing layer 10B, a material such as polyamide, polytetrafluoroethylene (PTFE), fluororesin, perfluoroelastomer, or fluororubber is used depending on an operating temperature or wear resistance. Also, the second sealing layer 10B is provided with a cut surface for insertion formed by cutting a part of the second sealing layer 10B radially or obliquely with respect to the radial direction.

The second sealing layer 10B is expanded from the cut surface for insertion, and then laterally inserted and fitted in a radial direction of the rotary shaft 50. Subsequently, the second sealing layer 10B is joined to the opposed sealing surface 12A with the adhesive. Alternatively, the second sealing layer 10B may be formed by being preliminarily coated on the opposed sealing surfaces 12A and 12A of the both portions 12X and 12Y of the halved split rotary seal ring 12. Still alternatively, the second sealing layer 10B may be formed by being coated on the opposed sealing surface 12A after the split rotary seal ring 12 has been fitted around the rotary shaft 50. The second sealing layer 10B is formed to have a thickness range of 0.01 mm to 2 mm; however, there is an example where the thickness is designed in the range of 0.005 mm to 3.2 mm in consideration of a lifetime due to wearing, or the like. Note that in Figs. 3A and 3B, respective parts represented by Reference numerals of which explanations are not given are the same parts in Fig. 1 represented by the same Reference numerals.

An illustration of a second tightening ring 17 fitted on the second outer circumferential 12D side of the split rotary seal ring 12 is omitted because the second tightening ring 17 can be illustrated as a diagram similar to the elevational view of the first tightening ring 7 as viewed from the opposed sealing surface 12A side. In addition, the second tightening ring 17 has a shape almost symmetrical to that of the first tightening ring 7. The second tightening ring 17 is split along its center line as viewed from its front surface, i.e., parallel to the shaft direction, to form into a third split tightening ring 17A on one side and a fourth split tightening ring 17B on the other side. Also, the second tightening ring 17 is halved along the center line, i.e., parallel to the shaft direction, to form two second split surfaces (for details on the shape, see the first tightening ring 7 in Fig. 4). The both second split surfaces are made to face to each other, and then tightened with a plurality of bolts 35B (see Fig. 1 or 5). Also, two second split elastic rings 9B and 9B into which a cylindrical body is split are provided so as to face to each other between the second outer circumferential surface 12D of the split rotary seal ring 12 and a second tightening surface 17C of the second tightening ring 17 (see also Fig. 1). The joined second split elastic rings 9B and 9B are configured similarly to the first split elastic rings 9A and 9A in terms of material and thickness. The second split elastic rings 9B and 9B prevent deformation of the opposed sealing surface 12A, which is due to elastic deformation of the split rotary seal ring 12 occurring when the split rotary seal ring 12 is tightened by the second tightening ring 17.

As a result, the opposed sealing surface 12A can exercise its sealing capability. The second tightening surface 17C on an inner circumferential surface of the second tightening ring 17 is formed on an end side thereof with a second supporting surface 17C1 forming into a step surface. The second tightening surface 17C of the second tightening ring 17 is fitted into the second outer circumferential surface 12D of the split rotary seal ring 12, and the second supporting surface 17C1 is locked by the second step surface 12B. Also, two second locking grooves 3B for drive pins are formed at an equal distance (or symmetrically in position) on an outer circumferential surface of the second tightening ring 17.

On a side of the second tightening ring 17, a third tightening ring 40 is fitted around the rotary shaft 50. The third tightening ring 40 is equally split into two portions parallel to the shaft direction, and the two portions of the third tightening ring (40 and 40) are connected to each other by bringing split surfaces of the both portions into contact with each other with a plurality of bolts 39, and tightening an inner circumferential connecting surface 40C around the rotary shaft 50. On an inner circumferential side of a side of the third tightening ring 40, an annular convex portion 40D is formed, and the annular convex portion 40D presses the second O-ring 37. Also, the side of the third tightening ring 40 and that of the second tightening ring 17 may be connected to each other with unshown bolts to make a connection between the second tightening ring 17 and the split rotary seal ring 12. Further, a drive pin 43 B is screwed into and fixed to the side of the third tightening ring 40, and locked into the second locking hole 3B of the second tightening ring 17 to thereby rotationally move the second tightening ring 17 and the split rotary seal ring 12 along with the rotary shaft 50 (see also Fig. 5).

In Fig. 1, adjusting bolts 35 and 35 represented by a virtual line are respectively passed through two through-holes provided symmetrically in position along a circumferential surface of the second tightening ring 17. Then, the adjusting bolts 35 and 35 are screwed into the screw holes 7T and 7T provided on the first tightening ring 7. Screwing the adjusting bolts 35 and 35 into the screw holes 7T and 7T enables both of the sealing layers 10A and 10B to be brought into close contact with each other with optimum surface pressure. Further, after the first and second tightening rings 7 and 17 have been set up, the adjusting bolts 35 and 35 are removed from the mechanical seal device 1.

Fig. 5 is a full sectional view of a mechanical seal device according to a second embodiment of the present invention. A different point in Fig. 5 from the mechanical seal device 1 in Fig. 1 is that the split stationary seal ring 2 is made of hard resin blended with a wear resistant material or sintered metal blended with a lubricant agent in this embodiment. In this case, the sliding layer 2D2 is not necessarily provided on the fitting surface 2D1 of the split stationary seal ring 2. Also, a first O-ring 36 is fitted in an annular groove 60G provided on the housing 60. Fitting the first O-ring 36 in the annular groove 60G on the housing 60 enables frictional resistance of the split stationary seal ring 2 to be reduced upon sliding. Further, the fixing pin 43A is provided on the side of the housing 60 on the outside B of the machine by screwing. Also, a first engaging hole (not shown) is provided on a side of the first tightening ring 7 facing to the side of the housing 60. The fixing pin 43A is then inserted into the engaging hole, and locks the housing 60 side such that the first tightening ring 7 does not rotationally move together with the rotary shaft 50.

Also, the second tightening ring 17 is provided with the second locking hole 3B. The drive pin 43B is screwed into and fixed to a side of the third tightening ring 40 at a position corresponding to that of the second locking hole 3B. Then, the drive pin 43B is engaged with the second locking hole 3B to configure the rotary shaft 50 to transmit torque to the second tightening ring 17. Such a configuration in which the first and second tightening rings 7 and 17 are respectively provided with the first locking hole (unshown) and the second locking hole 3B enables the first and second tightening rings 7 and 17 to be miniaturized. Also, the configuration enables the first and second tightening rings 7 and 17 to be easily produced. Further, the configuration can make unnecessary the first split elastic ring 9A provided between the first outer circumferential surface 2D of the split stationary seal ring 2 and the first tightening surface 7C of the first tightening ring 7. By configuring as above, the mechanical seal device becomes simple in structure and easy in assembly. The rest of the configuration in this embodiment is almost the same as that of the mechanical seal device 1 in Fig. 1 as represented by Reference numerals same as those in Fig. 1.

Also, the second split elastic ring 9B is provided between the second tightening surface 17C of the second tightening ring 17 and the second outer circumferential surface 12D of the split rotary seal ring 12, similarly to the case of the first tightening ring 7. The second split elastic ring 9B produces a working effect similar to that of the first split elastic ring 9A.

In the mechanical seal device 1 configured as above, the sealing target fluid circulating through the circulating path A1 flows inside the inner circumferential surface 2C of the split stationary seal ring 2. However, the sealing surface 2A of the split stationary seal ring 2 provided with the first sealing layer 10A and the opposed sealing surface 12A of the split rotary seal ring 12 provided with the second sealing layer 10B come into close contact with each other to seal the sealing target fluid. As a result, even if the split stationary seal ring 12 and split rotary seal ring 12 are split parallel to the shaft direction, both of the sealing surfaces 2A and 12A reduces a friction coefficient, as well as exercising their sealing capability.

Further, both of the sealing surfaces 2A and 12A are provided with the sealing layers 10A and 10B, respectively, so that even if the sealing target fluid is gas, and even in a dry friction condition, the respective sealing surfaces 2A and 12A are prevented from wearing while preventing the squeal phenomenon upon sliding. As a result, the respective sealing surfaces 2A and 12A can exercise their sealing capability. Also, a sealing structure of the mechanical seal device 1 can be simplified, and the high-pressure sealing target fluid can be sealed. Further, even if the sealing target fluid is a highly viscous and highly slurry chemical solution, the split stationary seal ring 2 can exercise the sealing capability without attachment of the sealing target fluid.

Inventions according to the other embodiments related to the present invention are described below in terms of their configurations and working effects.

A mechanical seal device according to a first invention of the present invention has coating layers made of a rubber or resin material brought into close contact between the first split contact surfaces of the split stationary seal ring and between the second split contact surfaces of the split rotary seal ring.

According to the mechanical seal device of the first invention, the split contact surfaces can be effectively prevented from being damaged even if vibration occurs during operation, because the coating layer is present between split contact surfaces. Also, for easy adaptation, each of the contact surfaces is configured to be a fractured surface; however, providing the coating layer between the fractured split contact surfaces enables friction between the split contact surfaces to be prevented. Further, the coating layer can reliably seal the sealing target fluid from leaking from between the split contact surfaces. Still further, the outer circumferential surface of the seal ring is tightened by the split tightening ring; however, by providing the coating layer between the split contact surfaces, the split contact surfaces are not damaged even if the outer circumferential surface of the seal ring is tightened more than enough, and deformation of the sealing surface due to the tightening can be prevented. As a result, an effect of improving the sealing capability of the sealing surface of the seal ring can be expected.

In a mechanical seal device according to a second invention of the present invention, the split stationary seal ring has a first step surface between the first outer circumferential surface formed larger in diameter than the fitting surface and the fitting surface; the first tightening surface of the first tightening ring has the first supporting surface for locking the first step surface; the split rotary seal ring has the third outer circumferential surface smaller in diameter than the second outer circumferential surface at an end of the second circumferential surface, and the second step surface between the second outer circumferential surface and the third outer circumferential surface; the second tightening surface of the second tightening ring has the second supporting surface for locking the second step surface; and the first tightening ring and the second tightening ring are formed in shapes almost symmetrical to each other, the first supporting surface supports the first step surface, and the second supporting surface supports the second step surface.

According to the mechanical seal device of the second invention, the first tightening ring and the second tightening ring are formed in almost symmetrical shapes, i.e., formed in the almost same shape, so that both of the components can be made common, and therefore production cost can be reduced. Also, the sealing capability of the sealing surface can be exercised, and the sealing surface can also be prevented from seizing and wearing. Further, the first supporting surface and the second supporting surface are formed in symmetrical shapes, so that force acting from both sides presses on the rear surfaces of the both seal rings at symmetrical positions, and therefore equally acts on the sealing surfaces. As a result, the sealing surfaces can be expected to exercise their sealing capability. Still further, the first supporting surface and the second supporting surface are formed in symmetrical shapes, so that both of the components can be made common and miniaturized, and therefore component cost can be reduced. Also, assembly of the both split tightening rings is simplified.

In a mechanical seal device according to a third invention of the present invention, the outer circumference of the first tightening ring has the first locking groove in the shaft direction; the housing has the fixing pin fixed thereon in the shaft direction; and the fixing pin engages with the first locking groove in the shaft direction to fix the first tightening ring.

According to the mechanical seal device of the third invention related to the present invention, the fixing pin is configured to engage with the first locking groove in the shaft direction, and thereby fix the first tightening ring to prevent it from rotationally moving, so that the fitting surface of the split stationary seal ring can be inserted into the hole of the housing, and simultaneously the fixing pin can be inserted into the first locking groove of the first tightening ring. For this reason, it becomes extremely easy to attach the split stationary seal ring to the housing. Also, the split stationary seal ring becomes simple in structure, and therefore production cost can be reduced.

### Industrial applicability

The mechanical seal device can be assembled without removing the rotary shaft of the machine from the machine, and is therefore useful. Also, even if the mechanical seal device is of a split type, it is useful because the respective sealing surfaces can be prevented from wearing and exercise their sealing capability. Further, the mechanical seal device is simple in structure and can be easily assembled, and is therefore useful because of its low assembly cost.

## Claims

1. A mechanical seal device for sealing a sealing target fluid between a hole of a housing (60) and a rotary shaft (50) inserted into said hole inside a machine, the mechanical seal device being attached to an outer side of the machine, the mechanical seal device comprising:
a split stationary seal ring (2) to be fixed having: a fitting surface (2D 1) on an outer circumference, the fitting surface (2D1) being hermetically fitted into a circumferential surface of the hole of said housing (60) and held movably in a shaft direction; a first outer circumferential surface (2D) formed on said outer circumference; a sealing surface (2A) on an end surface in the shaft direction; and a plurality of first split contact surfaces (2J) capable of being closely joined to one another, the plurality of first split contact surfaces (2J) being exposed by splitting the split stationary seal ring (2) parallel to the shaft direction;
a first tightening ring (7) having: a first tightening surface (7C) fitted into said first outer circumferential surface (2D) of said split stationary seal ring (2) to bring said plurality of first split contact surfaces (2J) of said split stationary seal ring (2) into close contact with one another; and a plurality of first split surfaces capable of being closely joined to one another, the plurality of first split surfaces being exposed by splitting the first tightening ring (7) parallel to the shaft direction;
a split rotary seal ring (12) to be rotationally moved by said rotary shaft (50), the split rotary seal ring (12) having: an opposed sealing surface (12A) coming into close contact with said sealing surface (2A) oppositely; a second outer circumferential surface (12D) provided on an outer circumference; and a plurality of second split contact surfaces (12J) capable of being closely joined to one another, the plurality of second split contact surfaces (12J) being exposed by splitting the split rotary seal ring (12) parallel to the shaft direction; and
a second tightening ring (17) having: a second tightening surface (17C) fitted into said second outer circumferential surface (12D) of said split rotary seal ring (12) to bring said plurality of second split contact surfaces (12J) of said split rotary seal ring (12) into close contact with one another; and a plurality of second split surfaces capable of being closely joined to one another, the plurality of second split surfaces being exposed by splitting the second tightening ring (17) parallel to the shaft direction; wherein
a gap is provided between an inner circumferential surface (2C) of said split stationary seal ring (2) and said rotary shaft (50), the gap being capable of circulating therethrough the sealing target fluid on an inner circumferential side of a joining portion between said sealing surface (2A) and said opposed sealing surface (12A),
**characterized in that**
both of said sealing surface (2A) of said split stationary seal ring (2) and said opposed sealing surface (12A) of said split rotary seal ring (12) have sealing layers (10A; 10B) made of a rubber or resin material.

2. The mechanical seal device according to claim 1, wherein coating layers made of a rubber or resin material are brought into close contact between any adjacent two of the plurality of first split contact surfaces (2J) of said split stationary seal ring (2) and between any adjacent two of the plurality of second split contact surfaces (12J) of said split rotary seal ring (12).

3. The mechanical seal device according to claim 1, wherein said split stationary seal ring (2) has a first step surface (2B) between said first outer circumferential surface (2D) formed larger in diameter than said fitting surface (2D1) and said fitting surface (2D1); said first tightening surface (7C) of said first tightening ring (7) has a first supporting surface (7C1) for locking said first step surface (2B); said split rotary seal ring (12) has a third outer circumferential surface (12D 1) smaller in diameter than said second outer circumferential surface (12D) at an end of said second circumferential surface, and a second step surface (12B) between said second outer circumferential surface (12D) and said third outer circumferential surface (12D1); said second tightening surface (17C) of said second tightening ring (17) has a second supporting surface (17C1) for locking said second step surface (12B); and said first tightening ring (7) and said second tightening ring (17) are formed in shapes almost symmetrical to each other, said first supporting surface (7C1) supports said first step surface (2B), and said second supporting surface (17C1) supports said second step surface (12B).

4. The mechanical seal device according to claim 1, wherein an outer circumference of said first tightening ring (7) has a first locking groove (3A) in the shaft direction; said housing (60) has a fixing pin (43A) fixed thereon in the shaft direction; and said fixing pin (43A) engages with said first locking groove (3A) in the shaft direction to fix said first tightening ring (7).

## Patentansprüche

1. Mechanische Dichtungsvorrichtung zur Abdichtung eines Dichtungszielfluids zwischen einem Loch eines Gehäuses (60) und einer drehbaren Welle (50), die im Inneren einer Maschine in dieses Loch eingeführt ist, welche mechanische Dichtungsvorrichtung an einer Außenseite der Maschine angebracht ist und aufweist:
einen zu fixierenden, geteilten stationären Dichtungsring (2), der folgendes aufweist: eine Passfläche (2D1) an einem äußeren Umfang, wobei die Passfläche (2D1) hermetisch in eine Umfangsfläche des Loches des Gehäuses (60) eingepasst und in Richtung der Welle beweglich gehalten ist, eine an dem äußeren Umfang gebildete erste äußere Umfangsfläche (2D), eine Dichtungsfläche (2A) an einer Stirnfläche in Richtung der Welle gesehen, und mehrere erste Teilungs-Anlageflächen (2J), die freigelegt werden, indem der geteilte stationäre Dichtungsring (2) parallel zur Richtung der Welle geteilt wird,
einen ersten Spannring (7) mit: einer ersten Spannfläche (7C), die in die erste äußere Umfangsfläche (2D) des geteilten stationären Dichtungsrings (2) eingepasst ist, um die Mehrzahl der ersten Teilungs-Anlageflächen (2J) des geteilten stationären Dichtungsrings (2) in enge Berührung miteinander zu bringen, und einer Vielzahl erster Teilungsflächen, die in der Lage sind, eng zusammengefügt zu werden, wobei die mehreren ersten Teilungsflächen freigelegt werden, indem der erste Spannring (7) in der Richtung parallel zu der Welle geteilt wird,
einen geteilten drehbaren Dichtungsring (12), der durch die drehbare Welle (50) drehantreibbar ist, wobei der geteilte drehbare Dichtungsring (12) aufweist: eine Dichtungsgegenfläche (12A), die in enge Berührung mit der gegenüberliegenden Dichtungsfläche (2A) kommt, eine zweite äußere Umfangsfläche (12D) an einem äußeren Umfang, und eine Vielzahl zweiter Teilungs-Anlageflächen (12J), die in der Lage sind, eng zusammengefügt zu werden, wobei die mehreren zweiten Teilungs-Anlageflächen (12J) freigelegt werden indem, der geteilte drehbare Dichtungsring (12) in Richtung parallel zu der Welle geteilt wird, und
einen zweiten Spannring (17), der folgendes aufweist: eine zweite Spannfläche (17C), die in die zweite äußere Umfangsfläche (12D) des geteilten drehbaren Dichtungsrings (12) eingepasst ist, um die mehreren zweiten Teilungs-Anlageflächen (12J) des geteilten drehbaren Dichtungsrings (12) in enge Berührung miteinander zu bringen, und mehrere zweite Teilungsflächen, die in der Lage sind, eng zusammengefügt zu werden, wobei die mehreren zweiten Teilungsflächen freigelegt werden, indem der zweite Dichtungsring (17) in der Richtung parallel zu der Welle geteilt wird, wobei
zwischen einer inneren Umfangsfläche (2C) des geteilten stationären Dichtungsrings (2) und der drehbaren Welle (50) ein Spalt vorgesehen ist, durch den das Dichtungszielfluid auf einer inneren Umfangsseite eines Fügebereichs zwischen der Dichtungsfläche (2A) und der Dichtungsgegenfläche (12A) zirkulieren kann,
**dadurch gekennzeichnet dass**
sowohl die Dichtungsfläche (2A) des geteilten stationären Dichtungsrings (2) als auch die Dichtungsgegenfläche (12A) des geteilten drehbaren Dichtungsrings (12) Dichtungsschichten (10A; 10B) haben, die aus einem Gummi- oder Harzmaterial hergestellt sind.

2. Mechanische Dichtungsvorrichtung nach Anspruch 1, bei der Beschichtungslagen aus einem Gummi- oder Harzmaterial zwischen je zwei benachbarten ersten Teilungs-Anlageflächen (2J) unter der Mehrzahl der ersten Teilungs-Anlageflächen des geteilten stationären Dichtungsrings (2) und zwischen je zwei zweiten Teilungs-Anlageflächen (12J) unter der Mehrzahl der zweiten Teilungs-Anlageflächen des geteilten drehbaren Dichtungsrings (12) in enge Berührung miteinander gebracht werden.

3. Mechanische Dichtungsvorrichtung nach Anspruch 1, bei der der geteilte stationäre Dichtungsring (2) eine erste Stufenfläche (2B) zwischen der ersten äußeren Umfangsfläche (2D), die einen größeren Durchmesser als die genannte Passfläche (2D1) hat, und der Passfläche (2D1) aufweist, die erste Spannfläche (7C) des ersten Spannrings (7) eine erste Stützfläche (7C1) zum Verriegeln der ersten Stufenfläche (2B) aufweist, der geteilte drehbare Dichtungsring (12) eine dritte äußere Umfangsfläche (12D1) aufweist, die einen kleineren Durchmesser hat als die zweite äußere Umfangsfläche (12D) an einem Ende dieser zweiten äußeren Umfangsfläche, und eine zweite Stufenfläche (12B) zwischen der genannten zweiten äußeren Umfangsfläche (12D) und der genannten dritten äußeren Umfangsfläche (12D1), wobei die zweite Dichtungsfläche (17C) des zweiten Dichtungsrings (17) eine zweite Stützfläche (17C1) zum Verriegeln der genannten zweiten Stufenfläche (12B) hat, und der erste Dichtungsring (7) und der zweite Dichtungsring (17) annähernd symmetrisch zueinander geformt sind, wobei die erste Stützfläche (7C1) die erste Stufenfläche (2B) abstützt und die zweite Stützfläche (17C1) die zweite Stufenfläche (12B) abstützt.

4. Mechanische Dichtungsvorrichtung nach Anspruch 1, bei der ein äußerer Umfang des ersten Dichtungsrings (7) eine erste Verriegelungsnut (3A) in Richtung der Welle hat, das Gehäuse (60) einen Befestigungsstift (43A) hat, der daran in Richtung der Welle befestigt ist, und der Befestigungsstift (43A) in Richtung der Welle in die erste Verriegelungsnut (3A) eingereift, um den ersten Dichtungsring (7) zu fixieren.

## Revendications

1. Dispositif d'étanchéité mécanique pour sceller de façon étanche un fluide cible d'étanchéité entre un trou d'un boîtier (60) et un arbre rotatif (50) inséré dans ledit trou à l'intérieur d'une machine, le dispositif d'étanchéité mécanique étant fixé à un côté extérieur de la machine, le dispositif d'étanchéité mécanique comprenant :
une bague d'étanchéité fixe fendue (2) destinée à être fixée, comportant: une surface d'adaptation (2D1) sur une circonférence extérieure, la surface d'adaptation (2D1) étant hermétiquement adaptée dans une surface circonférentielle du trou dudit boîtier (60) et maintenue de façon mobile dans une direction d'arbre ; une première surface circonférentielle extérieure (2D) formée sur ladite circonférence extérieure ; une surface d'étanchéité (2A) sur une surface d'extrémité dans la direction d'arbre; et une pluralité de premières surfaces de contact fendues (2J) qui sont susceptibles d'être étroitement réunies entre elles, la pluralité de premières surfaces de contact fendues (2J) étant exposées par division de la bague d'étanchéité fixe fendue (2) parallèlement à la direction d'arbre ;
une première bague de serrage (7) comportant : une première surface de serrage (7C) adaptée à l'intérieur de ladite première surface circonférentielle extérieure (2D) de ladite bague d'étanchéité fixe fendue (2) de façon à amener ladite pluralité de premières surfaces de contact fendues (2J) de ladite bague d'étanchéité fixe fendue (2) en contact étroit entre elles ; et une pluralité de premières surfaces fendues susceptibles d'être étroitement réunies entre elles, la pluralité de premières surfaces fendues étant exposées par division de la première bague de serrage (7) parallèlement à la direction d'arbre ;
une bague d'étanchéité rotative fendue (12) destinée à être déplacée en rotation par ledit arbre rotatif (50), la bague d'étanchéité rotative fendue (12) comportant : une surface d'étanchéité opposée (12A) venant en contact étroit avec ladite surface d'étanchéité (2A) de façon opposée; une deuxième surface circonférentielle extérieure (12D) disposée sur une circonférence extérieure ; et une pluralité de deuxièmes surfaces de contact fendues (12J) susceptibles d'être étroitement réunies entre elles, la pluralité de deuxièmes surfaces de contact fendues (12J) étant exposées par division de la bague d'étanchéité rotative fendue (12) parallèlement à la direction d'arbre ; et
une deuxième bague de serrage (17) comportant : une deuxième surface de serrage (17C) adaptée dans ladite deuxième surface circonférentielle extérieure (12D) de ladite bague d'étanchéité rotative fendue (12) de façon à amener ladite pluralité de premières surfaces de contact fendues (2J) de ladite bague d'étanchéité rotative fendue (12) en contact étroit entre elles ; et une pluralité de deuxièmes surfaces fendues susceptibles d'être étroitement réunies entre elles, la pluralité de deuxièmes surfaces fendues étant exposées par division de la deuxième bague de serrage (17) parallèlement à la direction d'arbre ;
un espace étant formé entre une surface circonférentielle intérieure (2C) de ladite bague d'étanchéité fixe fendue (2) et ledit arbre rotatif (50), l'espace étant susceptible de faire circuler à travers celui-ci le fluide cible d'étanchéité sur un côté circonférentiel intérieur d'une partie de réunion entre ladite surface d'étanchéité (2A) et ladite surface d'étanchéité opposée (12A),
**caractérisé en ce que** :
ladite surface d'étanchéité (2A) de ladite bague d'étanchéité fixe fendue (2) et ladite surface d'étanchéité opposée (12A) de ladite bague d'étanchéité rotative fendue (12) comportent toutes deux des couches d'étanchéité (10A ; 10B) réalisées en un matériau en caoutchouc ou en résine.

2. Dispositif d'étanchéité mécanique selon la revendication 1, dans lequel des couches de revêtement réalisées en un matériau en caoutchouc ou en résine sont amenées en contact étroit entre n'importe quelles deux surfaces adjacentes de la pluralité de premières surfaces de contact fendues (2J) de ladite bague d'étanchéité fixe fendue (2) et entre n'importe quelles deux surfaces adjacentes de la pluralité de deuxièmes surfaces de contact fendues (12J) de ladite bague d'étanchéité rotative fendue (12).

3. Dispositif d'étanchéité mécanique selon la revendication 1, dans lequel ladite bague d'étanchéité fixe fendue (2) comporte une première surface d'épaulement (2B) entre ladite première surface circonférentielle extérieure (2D) formée avec un diamètre supérieur à celui de ladite surface d'adaptation (2D1) et ladite surface d'adaptation (2D1) ; ladite première surface de serrage (7C) de ladite première bague de serrage (7) comporte une première surface de support (7C1) pour verrouiller ladite première surface d'épaulement (2B) ; ladite bague d'étanchéité rotative fendue (12) comporte une troisième surface circonférentielle extérieure (12D1) ayant un diamètre inférieur à celui de ladite deuxième surface circonférentielle extérieure (12D) à une extrémité de ladite deuxième surface circonférentielle, et une deuxième surface d'épaulement (12B) entre ladite deuxième surface circonférentielle extérieure (12D) et ladite troisième surface circonférentielle extérieure (12D1) ; ladite deuxième surface de serrage (17C) de ladite deuxième bague de serrage (17) comporte une deuxième surface de support (17C1) pour verrouiller ladite deuxième surface d'épaulement (12B) ; et ladite première bague de serrage (7) et ladite deuxième bague de serrage (17) sont formées sous des formes presque symétriques l'une par rapport à l'autre, ladite première surface de support (7C1) supportant ladite première surface d'épaulement (2B), et ladite deuxième surface de support (17C1) supportant ladite deuxième surface d'épaulement (12B).

4. Dispositif d'étanchéité mécanique selon la revendication 1, dans lequel une circonférence extérieure de ladite première bague de serrage (7) comporte une première rainure de verrouillage (3A) dans la direction d'arbre ; ledit boîtier (60) comporte une broche de fixation (43A) fixée sur celui-ci dans la direction d'arbre ; et ladite broche de fixation (43A) vient en prise avec ladite première rainure de verrouillage (3A) dans la direction d'arbre de façon à fixer ladite première bague de serrage (7).
